# EUROPEAN PATENT SPECIFICATION

(11) **EP 0 548 547 B1**
(45) Date of publication and mention of the grant of the patent: **15.04.1998**
(21) Application number: 92119792.7
(22) Date of filing: 20.11.1992
(51) Int. Cl.: H04N 1/21, G11B 19/02

(54) **Information signal processing apparatus**
Informationssignalverarbeitungsapparat
Appareil pour traiter un signal d'information

(30) Priority: 21.11.1991 JP 306242/91; 13.04.1992 JP 92888/92; 17.04.1992 JP 98059/92
(43) Date of publication of application: 30.06.1993
(60) Divisional application: 96115543.9
(73) Proprietor: CANON KABUSHIKI KAISHA, Tokyo (JP)
(72) Inventor: Fukushima, Nobuo, c/o Canon Kabushiki Kaisha, Ohta-ku, Tokyo (JP); Yamagishi, Yoichi, c/o Canon Kabushiki Kaisha, Ohta-ku, Tokyo (JP)
(74) Representative: Bühling, Gerhard, Dipl.-Chem.

(56) References cited:
- EP-A- 0 186 883
- EP-A- 0 220 466
- EP-A- 0 428 310
- US-A- 5 043 816
- PATENT ABSTRACTS OF JAPAN vol. 5, no. 137 (E-072)29 August 1981 & JP-A-56 072 571
- PATENT ABSTRACTS OF JAPAN vol. 13, no. 150 (E-742)12 April 1989 & JP-A-63 309 064
- PATENT ABSTRACTS OF JAPAN vol. 15, no. 395 (P-1260)7 October 1991 & JP-A-03 157 772

## Description

### Background of the Invention:

### Field of the Invention:

The present invention relates to an information signal processing apparatus for processing an information signal.

### Description of the Related Art:

An electronic still video system has heretofore been known as one example of an information signal processing apparatus for processing an information signal. The electronic still video system is arranged to record image signals on a plurality of recording tracks which are concentrically formed on a magnetic disk, and to select an arbitrary recording track from among the recording tracks formed on the magnetic disk and reproduce the image signal recorded on the selected recording track.

Such an electronic still video system is arranged to record the image signals on the recording tracks formed on the magnetic disk, in the state of analog signals. However, a new system has recently been proposed which is arranged to digitize an image signal obtained by photographing a subject by using a video camera or the like and store the digitized image signal in a memory card including a plurality of RAMs (random access memories).

To digitize the image signal and store the digitized image signal in the memory card, a memory card having a large storage capacity is needed since the digitized image signal has an enormous amount of information. However, since the memory card having the large storage capacity is costly, the above-described system is extremely expensive.

To cope with this problem, a system has recently been considered which is capable of storing a digitized image signal by using a hard disk unit which is lower in cost and larger in storage capacity than the aforesaid memory card.

In the system using such a hard disk unit, during the process of digitizing an image signal obtained by photographing a subject by means of a video camera or the like and recording the digitized image signal on a hard disk of the hard disk unit, it takes a predetermined time for the hard disk to reach its stable rotational speed which permits the hard disk unit to execute a storing operation. For this reason, some type of system adopts an arrangement which causes the hard disk to start its rotation before a start of a photographing-and-recording operation and, after the rotation has settled, holds the hard disk in a continuous rotating state during a wait for the start of the photographing-and-recording operation. Another type of system is provided with a buffer memory for temporarily storing a digitized image signal. In this type of system, image data corresponding to a photographed image is stored in the buffer memory, and after the rotation of the hard disk has settled, the image data stored in the buffer memory is read out and transmitted to the hard disk for storing purposes.

However, if the hard disk is held in the continuous rotating state during waiting for the start of the photographing-and-recording operation, power consumption will increase. As a result, if a portable, electric power source, such as a battery, is used to supply electricity to the electronic still video system, it will be necessary to frequently perform battery replacement. In the case of the buffer memory, during the continuous-shooting recording operation of continuously storing, on a hard disk, image signals continuously supplied from a video camera or the like, the buffer memory for temporarily storing image data may overflow, thereby interrupting the continuous-shooting recording operation at an intermediate time.

Still another type of system has recently been proposed in which a memory card provided with a memory device, such as a DRAM, an SRAM or an EEPROM, is used as a recording medium so that a digitized still image and audio signals are recorded into the memory card.

However, the storage capacity of the memory card is limited because of the limited storage capacity per chip of the memory device or limits of the number of chips which can be mounted on a single memory card. In addition, since the memory device is more expensive than other recording media, it is economically difficult to utilize the memory card as a recording medium of large storage capacity.

In contrast, the aforementioned hard disk unit is known as a recording medium having a larger storage capacity than the memory card, and there has recently been provided a hard disk unit which is removably attachable to a main apparatus similarly to the memory card. If such a removable hard disk unit is used with an electronic still video camera as a recording medium, it is possible to construct comparatively inexpensively a system having a large storage capacity.

Various kinds of hard disk units are provided in accordance with various specifications such as recording capacity, weight, power consumption and recording speed. If the system is constructed so that plural kinds of hard disk units can be attached, it is possible to meet a variety of demands of users.

However, unlike the memory card having no mechanically moving part, the hard disk unit has the disadvantages that it is necessary to rotate a hard disk inside thereof during recording of an information signal and that a comparatively long time and electric power, which is larger than that during a normal rotating operation, are required during the start of rotation of the hard disk. For these reasons, a general arrangement is as follows: After the hard disk has been started up, it is held in a continuous rotating state for some time, and if a predetermined time elapses or the recording of the information signal is completed, the rotation of the hard disk is stopped.

However, if an electronic still video camera is constructed so that plural kinds of hard disk units can be attached as described above, since each kind of hard disk unit takes a different time to start up its hard disk, it is necessary to set the time interval during which the hard disk is held in a continuous rotating state after being started up, according to a particular hard disk unit from among the hard disk units attachable to the camera body of the electronic still video camera, that is, a hard disk unit which includes a hard disk having the longest start-up time and which consumes the largest amount of electric power during the start-up time of the hard disk.

For these reasons, the conventional system has the following problems. Even if a hard disk unit, which includes a hard disk having a short start-up time and which does not consume a large amount of electric power during the start-up time of the hard disk, is attached to the camera body, the hard disk is held in a continuous rotating state over a time interval longer than required with the result that a wasteful electric power is consumed. Since the aforesaid electronic still video camera is typically a portable apparatus which relies on a battery for its power supply, the wasteful power consumption remarkably decreases the time per battery during which the system can be operated to record information signals. As a result, if such an electronic still video camera is used to record still-image signals, the number of still-image pictures recordable per battery will be decreased.

Since the above-described electronic still video camera (electronic still camera) is arranged to perform digital recording, it is common practice to use a digital interface (I/F) as a transmission unit for transmitting data from the electronic still camera to external equipment.

Various types of digital I/Fs are available. However, since cameras are limited in body size, it is in many cases impossible to attach digital I/Fs of the type generally used with personal computers or the like to the cameras. For this reason, small digital I/Fs are generally used as transmission units dedicated to the cameras.

Alternatively, a method is proposed which utilizes a connector for a memory card as a digital I/F for transmission purposes.

Since electronic still cameras of the type using memory cards are provided with connectors for the memory cards, it is also possible to transmit data from such an electronic still camera to external equipment by using this general-purpose type of digital I/F.

However, in the case of an electronic still camera provided with both a transmission unit which is a digital I/F dedicated to the camera and a transmission unit which is a general-purpose digital I/F using a connector for a memory card, there is the problem that if both of the transmission units are connected to external equipment, it is impossible to determine which of the transmission units can be used to achieve optimum transmission.

Document EP-A-0 428 310 discloses an image signal processing apparatus which comprises first storage means for temporarily storing image data input therein and second storage means. Furthermore, a spindle motor (moving element) is provided allowing the second storage means to store in a recording medium the image data output from said first storage means.

It is an object of the present invention to provide an image signal processing apparatus capable of stably executing continuous recording of an image signal by means of a simple arrangement with a small power consumption.

According to the invention this object is accomplished by an image signal processing apparatus comprising: first storage means for temporarily storing image data inputted thereinto and outputting the image data; second storage means having a moving element for storing in a recording medium the image data outputted from said first storage means; characterized by counting means for counting the number of images corresponding to the image data already stored in the first storage means; discriminating means for discriminating whether the image data stored in the first storage means have reached a predetermined amount of image data which amount is greater than image data of one single picture; and operation controlling means for activating, if the discrimination is made that the amount of image data already stored in said first storage means exceeds said predetermined amount of image data, said second storage means by initiating the movement of said moving element for storing the image data output from said first storage means in said second storage means.

The present invention will be described hereinbelow by way of example and with reference to the accompanying drawings.

### Brief Description of the Drawings:

Fig. 1 is a block diagram schematically showing the arrangement of an electronic still video system to which the present invention is applied as a first embodiment thereof; and
Fig. 2 is an operational flowchart aiding in explaining a photographing-and-recording operaion executed by the electronic still video system shown in Fig. 1.

### Detailed Description of the Preferred Embodiments:

Embodiments of the present invention will be described below with reference to the accompanying drawings.

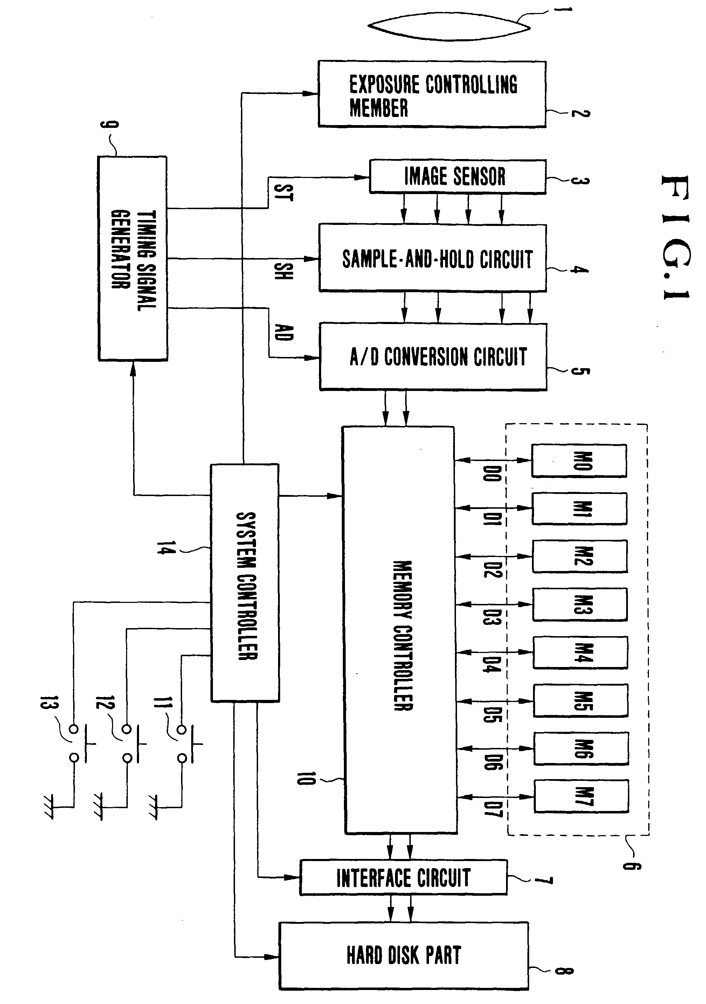

Fig. 1 is a block diagram schematically showing the arrangement of an electronic still video system to which the present invention is applied as a first embodiment thereof.

The electronic still video system shown in Fig. 1 includes an optical system 1 composed of a photographic lens, an exposure controlling member 2 made up of a diaphragm mechanism, a shutter mechanism and associated elements, an image sensor 3, a sample-and-hold circuit 4 for sampling and holding an analog image signal generated from the image sensor 3, an analog/digital (A/D) conversion circuit 5 for converting an analog image signal outputted from the sample-and-hold circuit 4 into digital image data, a memory part 6 made up of a plurality of buffer memories (M0 to M7 in Fig. 1) each consisting of a D-RAM (Dynamic Random Access Memory), a digital interface circuit 7 for supplying image data outputted from the memory part 6 to a hard disk part 8 which will be described later, the hart disk part 8 for receiving image data outputted from the memory part 6 and supplied through the digital interface circuit 7 and storing the received image data on its hard disk, a timing signal generator 9 for generating various kinds of timing signals such as a drive pulse (ST in Fig. 1) for driving the image sensor 3, a sample-and-hold pulse (SH in Fig. 1) for controlling a sample-and-hold operation executed by the sample-and-hold circuit 4, and a clock pulse (AD in Fig. 1) for controlling a conversion operation executed by the A/D conversion circuit 5, a memory controller 10 for controlling the image-data storing and reading operations of the memory part 6 as well as the D-RAM refreshing operation of the same, a first release switch SW1 11, a second release switch SW2 12, a lock switch 13 for inhibiting acceptance of instructions from each of the first and second release switches SW1 and SW2, and a system controller 14 for controlling the operation of the entire system.

The specifications of the hard disk part 8 used in the first embodiment will be described below.

The hard disk part 8 in the first embodiment is provided with a general-purpose hard disk unit manufactured by a hard-disk maker such as CONNER, PRAIRIE-TEK or AREAL.

The hard disk unit has the following three modes: an active mode, a power save mode and a standby mode.

The active mode is a mode for indicating that the hard disk unit is executing a data reading operation, a data writing operation or a sector seeking operation or the hard disk unit is placed in an idle state where the hard disk is rotating while waiting for the next command.

The power save mode is a mode for indicating that the hard disk is rotating with a head being retracted from the hard disk. Mode switching from the power save mode to the aforesaid active mode takes approximately several hundred milliseconds.

The standby mode is a mode for indicating that the rotation of the hard disk is stopped. Mode switching from the standby mode to the active mode takes a longer time than the mode switching from the power save mode to the active mode.

The hard disk unit has, in its normal form, the function of automatically switching from the active mode to the power save mode or the standby mode if the state of executing none of the data writing operation, the data reading operation and the sector seeking operation continues during a predetermined time when the active mode is selected. In the first embodiment, however, it is assumed that such function is not employed and that after the hard disk unit has received a command, the hard disk unit immediately switches to a desired mode.

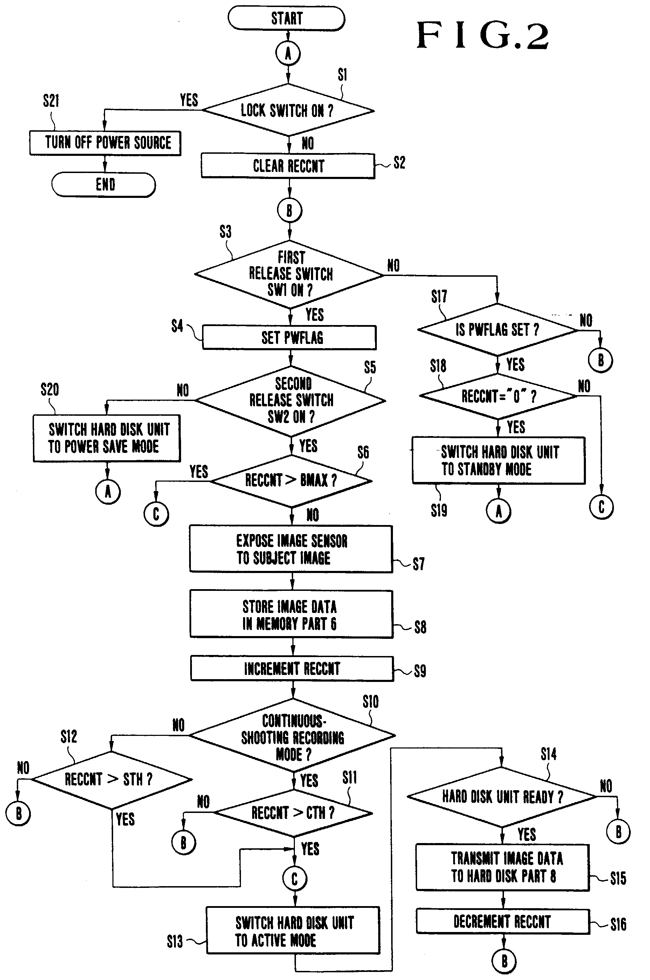

A photographing-and-recording operation executed by the electronic still video system shown in Fig. 1 will be described below with reference to the operational flowchart shown in Fig. 2.

Fig. 2 is an operational flowchart aiding in explaining the photographing-and-recording operation executed by the electronic still video system shown in Fig. 1.

Referring to Fig. 2, a decision is initially made as to the state of the lock switch 13. If the lock switch 13 is turned off, the count value of a counter (hereinafter referred to as "the RECCNT") is cleared to "0" (Steps S1 and S2 in Fig. 2). The RECCNT is provided in the system controller 14 and serves to count the number of images corresponding to image data stored in the memory part 6.

If it is determined in Step S1 that the lock switch 13 remains on, the flow proceeds to Step S21, where the system controller 14 turns off an electric power source which is not shown.

Then, the system controller 14 examines the operational state of the first release switch SW1 11. If the first release switch SW1 11 is on, the system controller 14 causes the electric power source (not shown) to start supplying electricity to the hard disk part 8, and also sets a flag (hereinafter referred to as "the PWFLAG") indicative of the state where electricity is being supplied from the electric power source to the hard disk part 8 (Steps S3 and S4 in Fig. 2).

Then, the system controller 14 examines the operational state of the second release switch SW2 12. If the second release switch SW2 12 is off, the system controller 14 transmits a power save command to the hard disk unit provided in the hard disk part 8, and the hard disk unit which has received the power save command starts switching to the above-described power save mode (Steps S5 and S20 in Fig. 2).

In Step S5 of Fig. 2, if it is determined that the second release switch SW2 12 is on, the system controller 14 examines whether the buffer memories M0 to M7 in the memory part 6 have overflown (Steps S5 and S6 in Fig. 2).

More specifically, in Step S6 of Fig. 2, it is determined whether the count value of the RECCNT exceeds a value BMAX indicative of the maximum storable number of images corresponding to image data stored in the memory part 6, thereby examining whether the buffer memories M0 to M7 in the memory part 6 have overflown.

If it is determined in Step S6 of Fig. 2 that the count value of the RECCNT does not exceed the value BMAX, the system controller 14 controls the shutter mechanism of the exposure controlling member 2 to expose the imaging surface of the image sensor 3 to a subject image. The image signal outputted from the image sensor 3 is sampled and held by the sample-and-hold circuit 4, and the analog output from the sample-and-hold circuit 4 is converted into digital image data by the A/D conversion circuit 5. The digital image data provided by the A/D conversion circuit 5 is supplied to the memory part 6, in which the supplied digital image data is stored in the buffer memories M0 to M7. Then, the count value of the RECCNT provided in the system controller 14 is incremented to store a count value indicative of the number of images corresponding to the image data stored in the buffer memories M0 to M7 of the memory part 6. (Refer to Steps S6 to S9 of Fig. 2.)

During the above-described operation, the image sensor 3, the sample-and-hold circuit 4 and the A/D conversion circuit 5 are respectively driven by pulses such as the drive pulse ST, the sample-and-hold pulse SH and the clock pulse AD outputted from the timing signal generator 9.

The system controller 14 determines whether a shooting recording mode which is set by operating an operating part (not shown) is a continuous-shooting recording mode or a single-shooting recording mode (Step S10 in Fig. 2). If the continuous-shooting recording mode is set, the flow proceeds to Step S11 of Fig. 2, where it is determined whether the count value of the RECCNT exceeds a value CTH indicative of a predetermined storable number of exposures. If the single-shooting recording mode is set, the flow proceeds to Step S12 of Fig. 2, where it is determined whether the count value of the RECCNT exceeds a value STH indicative of a predetermined storable number of exposures.

The value CTH used during the continuous-shooting recording mode is selected to be greater than the value STH used during the single-shooting recording mode.

If the count value of the RECCNT exceeds the value CTH or STH in Step S11 or S12 of Fig. 2, the system controller 14 transmits an active command to the hard disk unit provided in the hard disk part 8, and the hard disk unit which has received the active command is switched to the above-described active mode, where the hard disk in the hard disk unit is made to start rotating (Step S13 in Fig. 2). If the count value of the RECCNT does not exceed the value CTH or STH, the system controller 14 returns the flow to the connection symbol B shown in Fig. 2 and waits for the next photographing-and-recording operation.

Then, the system controller 14 examines whether the rotation of the hard disk in the hard disk unit has settled to such an extent that image data is writable to the hard disk (hereinafter referred to as "the READY state"). If the READY state has not yet been reached, the flow returns to the connection symbol B of Fig. 2 (Step S14 in Fig. 2).

If it is determined in Step S14 of Fig. 2 that the READY state has been reached, the image data stored in the buffer memories M0 to M7 of the memory part 6 are transmitted to the hard disk part 8, and the count value of the RECCNT provided in the system controller 14 is decremented by the number of images corresponding to the image data transmitted from the memory part 6 to the hard disk part 8. Then, the flow returns to the connection symbol B of Fig. 2 (Steps S15 and S16 in Fig. 2).

If the system controller 14 determines in Step S3 of Fig. 2 that the first release switch SW1 11 is off, the system controller 14 determines whether the PWFLAG is set. If it is determined that the PWFLAG is not set, it is determined that the photographing-and-recording operation has so far not been executed, and the flow returns to the connection symbol B of Fig. 2. If it is determined that the PWFLAG is set, the count value of the RECCNT provided in the system controller 14 is checked. If the count value of the RECCNT is not "0", it is determined that the image data remains stored in the memory part 6, and the flow proceeds to the connection symbol C shown in Fig. 2 and a routine for recording image data on the hard disk is executed. If the count value of the RECCNT is "0", it is determined that the image data stored in the memory part 6 has already been transmitted to the hard disk part 8 and recorded on the hard disk. The system controller 14 transmits a standby command to the hard disk unit provided in the hard disk part 8, thereby switching the hard disk unit to the above-described standby mode. Then, the flow returns to the connection symbol A of Fig. 2 (Step S17 to S19 in Fig. 2).

In the above-described first embodiment, the value CTH which indicates the predetermined storable number of exposures associated with the continuous-shooting recording mode is selected to be greater than the value STH which indicates the predetermined storable number of exposures associated with the single-shooting recording mode. However, the value STH may be selected to be greater than the value CTH.

The above description of the first embodiment has been made on the assumption that no use is made of the function of automatically switching the hard disk unit from the active mode to the power save mode or the standby mode if the state of executing none of the data writing operation, the data reading operation and the sector seeking operation continues during the predetermined time when the hard disk unit is in the active mode, as well as that after the hard disk unit has received a command, the hard disk unit immediately switches to a desired mode. However, in the first embodiment, the aforesaid function may be used, in which case the time setting of a timer for counting the time taken to switch the hard disk unit from the active mode to the power save mode or the standby mode may be varied according to each individual photographing operation so that the timer can be operated at an optimum timing during the photographing-and-recording operation.

In the above-described first embodiment, if it is determined that the first release switch SW1 11 is off, the image data stored in the buffer memories M0 to M7 of the memory part 6 are transmitted to the hard disk part 8, and after the transmission of all the image data to the hard disk part 8 has been completed, if it is determined in Step S18 of Fig. 2 that the value of the RECCNT in the system controller 14 has reached "0", the standby command is immediately transmitted to the hard disk unit provided in the hard disk part 8. However, another arrangement may be adopted. For example, after the transmission to the hard disk part 8 of all the image data stored in the buffer memories M0 to M7 provided in the memory part 6 has been completed and the value of the RECCNT in the system controller 14 has reached "0", a check is made as to the operational state of the first release switch SW1 11 and a timer or the like is used to count the time interval during which the first release switch SW1 11 is off. If the off state of the first release switch SW1 11 continues during a predetermined time, the standby command is transmitted to the hard disk unit provided in the hard disk part 8. In addition, the time interval to be counted by the timer may be varied between the continuous-shooting recording mode and the single-shooting recording mode.

As is known, when the hard disk in the hard disk unit is to be initially rotated, control parameters such as rotational servo data for the hard disk are varied according to the state of the hard disk. As a result, there is a case where the start-up time of the hard disk during the initial rotating operation thereof becomes longer than that of the hard disk during the second rotating operation et seqq.

For this reason, the value CTH which indicates the predetermined storable number of exposures associated with the continuous-shooting recording mode and the value STH which indicates the predetermined storable number of exposures associated with the single-shooting recording mode may be varied between the initial rotating operation of the hard disk and the second rotating operation et seqq.

For example, during the second rotating operation et seqq of the hard disk, the values CTH and STH may be selected to be greater than those during the initial rotating operation so that the rotating operation of the hard disk can be started after a greater amount of image data has been stored in the buffer memories MO to M7 of the memory part 6.

In the above-described first embodiment, the RECCNT, i.e., the count for counting the number of images corresponding to image data stored in the memory part 6, is provided in the system controller 14, and what is the number of images corresponding to image data stored in the buffer memories M0 to M7 of the memory part 6 is detected from the value of the RECCNT and the count value of the RECCNT is compared with the value CTH or STH. However, the number of storable exposures may be detected which indicates how many images correspond to the amount of image data which can be stored in the buffer memories M0 to M7 of the memory part 6, and if it is determined that the number of storable exposures has become less than a predetermined value which is set according to either of the shooting recording modes (i.e., the continuous-shooting recording mode or the single-shooting recording mode), the rotating operation of the hard disk of the hard disk unit may be started. In addition, the predetermined value to be compared with the number of storable exposures may be varied similarly to the values CTH and STH.

As described above, in the first embodiment, image data obtained by digitizing an image signal outputted from the image sensor 3 by turning on the first release switch SW1 11 is stored in the buffer memories M0 to M7 of the memory part 6, and if the image data stored in the buffer memories M0 to M7 reaches a predetermined amount, the rotating operation of the hard disk provided in the hard disk part 8 is started. Accordingly, it is not necessary to hold the hard disk of the hard disk unit in a continuous rotating state during a wait for a photographing-and-recording operation, so that an increase in power consumption can be prevented to provide a saving of electrical energy. Even if a portable, electric power source, such as a battery, is used to supply electricity to the electronic still video system, there is no need to frequently perform battery replacement and it is also possible to perform a stable, continuous-shooting recording operation without causing the buffer memories M0 to M7 of the memory part 6 to overflow and interrupting the continuous-shooting recording operation during the continuous-shooting recording mode. In addition, by varying the aforesaid predetermined amount according to the kind of the shooting recording mode and the operating mode of the hard disk unit provided in the hard disk part 8, it is possible to reduce the time during which the hard disk is made to continuously rotate while waiting for a command.

As is apparent from the above description, in accordance with the first embodiment, it is possible to provide an image signal processing apparatus capable of stably performing continuous recording of an image signal by means of a simple arrangement and with a reduced power consumption.

## Claims

1. An image signal processing apparatus comprising:
(**A**) first storage means for temporarily storing image data inputted thereinto and outputting the image data;
(**B**) second storage means having a moving element for storing in a recording medium the image data outputted from said first storage means;
**characterized by**
(**C**) counting means (**RECCNT**) for counting the number of images corresponding to the image data already stored in the first storage means (**6**);
(**D**) discriminating means (**S11 in Fig. 2**) for discriminating whether the image data stored in the first storage means have reached a predetermined amount of image data (**CTH**) which amount is greater than image data of one single picture; and
(**E**) operation controlling means for activating, if the discrimination is made that the amount of image data already stored in said first storage means exceeds said predetermined amount of image data (**CTH**), said second storage means by initiating the movement of said moving element for storing the image data output from said first storage means in said second storage means.

2. An image signal processing apparatus according to claim 1, wherein said first storage means has a continuous storage mode for continuously storing image data and a discontinuous storage mode for discontinuously storing image data, said operation controlling means being arranged to vary a movement starting timing of the moving element of said second storage means between a case where said first storage means stores image data in accordance with the continuous storage mode and a case where said first storage means stores image data in accordance with the discontinuous storage mode.

3. An image signal processing apparatus according to claim 1, wherein said second storage means has plural kinds of operating modes, said operation controlling means being arranged to vary a movement starting timing of the moving element of said second storage means in accordance with the kind of each of the operating modes of said second storage means.

4. An image signal processing apparatus according to claim 1, wherein said second storage means has a first storage operation mode for storing image data after a first time interval and a second storage operation mode for storing image data after a second time interval longer than the first time interval, said operation controlling means being arranged to vary a movement starting timing of the moving element of said second storage means between a case where said second storage means operates in accordance with the first storage operation mode and a case where said second storage means operates in accordance with the second storage operation mode.

5. An image signal processing apparatus according to claim 1, wherein said first storage means includes a memory device.

6. An image signal processing apparatus according to claim 1, wherein said second storage means includes a hard disk unit.

## Patentansprüche

1. Bildsignalverarbeitungsapparat, mit:
(A) ersten Speichermitteln zur zeitweiligen Speicherung von in diesen eingegebene Bilddaten und zur Ausgabe der Bilddaten;
(B) zweiten Speichermitteln mit einem Bewegungselement zur Speicherung der aus den ersten Speichermitteln ausgegebenen Bilddaten in einem Aufzeichnungsträger;
gekennzeichnet durch
(C) Zählmittel (RECCNT) zur Zählung der Anzahl von Bildern entsprechend der bereits im ersten Speichermittel (6) gespeicherten Bilddaten;
(D) Unterscheidungsmittel (S11 in Fig. 2) zum Selektieren, ob die im ersten Speichermittel gespeicherten Bilddaten einen vorbestimmten Betrag an Bilddaten (CTH) erreicht haben, der größer als der Bilddatenbetrag eines einzelnen Bildes ist; und durch
(E) Operationssteuermittel zur Aktivierung des zweiten Speichermittels, wenn das Selektieren ergibt, daß der Betrag an bereits im ersten Speichermittel gespeicherten Bilddaten den vorbestimmten Betrag an Bilddaten (CTH) übersteigt, durch Initialisieren der Bewegung des Bewegungselements zur Speicherung der Bilddaten, die vom ersten Speichermittel in das zweite Speichermittel abgegeben werden.

2. Bildsignalverarbeitungsapparat nach Anspruch 1, dessen erstes Speichermittel einen kontinuierlichen Speicherbetrieb zur kontinuierlichen Bilddatenspeicherung und einen diskontinuierlichen Speicherbetrieb zur diskontinuierlichen Bilddatenspeicherung ausführt, wobei das Operationssteuermittel eingerichtet ist, eine Bewegungsstartzeit des Bewegungselements des zweiten Speichermittels dann zu variieren, wenn das erste Speichermittel Bilddaten im kontinuierlichen Speicherbetrieb speichert, und wenn das erste Speichermittel Bilddaten im diskontinuierlichen Speicherbetrieb speichert.

3. Bildsignalverarbeitungsapparat nach Anspruch 1, dessen Speichermittel über mehrere Arten des Betriebs verfügt, wobei das Operationssteuermittel eingerichtet ist, eine Bewegungsstartzeit des Bewegungselements des zweiten Speichermittels gemäß einer jeden Betriebsart des zweiten Speichermittels zu variieren.

4. Bildsignalverarbeitungsapparat nach Anspruch 1, dessen zweites Speichermittel über einen ersten Speicherbetrieb zur Speicherung von Bilddaten nach einem ersten Zeitintervall und über einen zweiten Speicherbetrieb zur Speicherung von Bilddaten nach einem zweiten Zeitintervall verfügt, das länger als das erste Zeitintervall ist, wobei das Betriebssteuermittel eingerichtet ist, eine Bewegungsstartzeit des Bewegungselementes des zweiten Speichermittels zwischen einem Fall zu variieren, bei dem das zweite Speichermittel gemäß dem ersten Speicherbetrieb arbeitet, und einem Fall, bei dem das zweite Speichermittel gemäß dem zweiten Speicherbetrieb arbeitet.

5. Bildsignalverarbeitungsapparat nach Anspruch 1, dessen erstes Speichermittel über eine Speichereinrichtung verfügt.

6. Bildsignalverarbeitungsapparat nach Anspruch 1, dessen zweites Speichermittel über eine Festplatteneinheit verfügt.

## Revendications

1. Appareil pour traiter des signaux d'image, comprenant :
(**A**) un premier moyen d'enregistrement pour enregistrer temporairement des données d'image d'entrée et fournir des données d'image de sortie;
(**B**) un second moyen d'enregistrement ayant un élément mobile pour enregistrer sur un support d'enregistrement les données d'image de sortie fournies par ledit premier moyen d'enregistrement;
**caractérisé par**
(**C**) un moyen de comptage (**RECCNT**) pour compter le nombre d'images correspondant aux données d'image déjà enregistrées dans le premier moyen d'enregistrement (**6**);
(**D**) un moyen discriminateur (**S11 sur la fig. 2**) pour déterminer si les données d'image enregistrées dans le premier moyen d'enregistrement ont atteint une quantité prédéterminée de données d'image (**CTH**) supérieure aux données d'image d'une seule image; et
(**E**) un moyen de commande du fonctionnement pour activer, lorsque le discriminateur a déterminé que la quantité de données d'image déjà enregistrées dans ledit premier moyen d'enregistrement dépasse ladite quantité prédéterminée de données d'image (**CTH**), ledit second moyen d'enregistrement, en initiant le mouvement dudit élément mobile pour enregistrer les données d'image de sortie fournies par ledit premier moyen d'enregistrement audit second moyen d'enregistrement.

2. Appareil pour traiter des signaux d'image selon la revendication 1, dans lequel ledit premier moyen d'enregistrement permet un mode d'enregistrement en continu pour enregistrer les données d'image de manière continue et un mode d'enregistrement en discontinu pour enregistrer les données d'image de manière discontinue, ledit moyen de commande du fonctionnement étant agencé de manière à changer le moment de démarrage du mouvement de l'élément mobile dudit second moyen d'enregistrement selon que ledit premier moyen d'enregistrement d'image enregistre des données d'image dans le mode d'enregistrement en continu ou que ledit premier moyen d'enregistrement enregistre les données d'image dans le mode d'enregistrement en discontinu.

3. Appareil pour traiter des signaux d'image selon la revendication 1, dans lequel ledit second moyen d'enregistrement permet plusieurs modes de fonctionnement, ledit moyen de commande du fonctionnement étant agencé pour changer le moment du démarrage du mouvement de l'élément mobile dudit second moyen d'enregistrement selon le type de mode de fonctionnement particulier dudit second moyen d'enregistrement.

4. Appareil pour traiter des signaux d'image selon la revendication 1, dans lequel ledit second moyen d'enregistrement a un premier mode de fonctionnement de l'enregistrement pour enregistrer les données d'image après un premier intervalle de temps et un second mode de fonctionnement de l'enregistrement pour enregistrer des données d'image après un second intervalle de temps supérieur au premier intervalle de temps, ledit moyen de commande du fonctionnement étant agencé pour changer le moment du démarrage du mouvement dudit élément mobile dudit second moyen d'enregistrement selon que ledit second moyen d'enregistrement fonctionne selon le premier mode de fonctionnement de l'enregistrement ou que ledit second moyen d'enregistrement fonctionne selon le second mode de fonctionnement de l'enregistrement.

5. Appareil pour traiter des signaux d'image selon la revendication 1, dans lequel ledit premier moyen d'enregistrement comporte un dispositif de mémoire.

6. Appareil pour traiter des signaux d'image selon la revendication 1, dans lequel ledit second moyen d'enregistrement comprend une unité de disque dur.
